Europäisches Patentamt

**European Patent Office**

**Office européen des brevets**

(19)

(11) Numéro de publication: **0 125 969**

**A1**

(12)

# DEMANDE DE BREVET EUROPEEN

(21) Numéro de dépôt: **84400877.1**

(22) Date de dépôt: **02.05.84**

(51) Int. Cl.³: **C 12 G 1/06**

(30) Priorité: **11.05.83 FR 8307864**

(43) Date de publication de la demande:
**21.11.84 Bulletin 84/47**

(84) Etats contractants désignés:
**AT BE CH DE IT LI LU**

(71) Demandeur: **CENTRE DE DIFFUSION DE LA METHODE CHAMPENOISE AUTOMATISEE (M.C.A.) Groupement d'Intérêt Economique**
**79 avenue A.A. Thévenet Magenta**
**F-51200 Epernay(FR)**

(72) Inventeur: **Jeanrat, Roger**
**Rue St. Brice**
**F-51160 Ay(FR)**

(72) Inventeur: **Martin, Pierre Marie**
**L'Echelle**
**F-51200 Reuil(FR)**

(72) Inventeur: **Hardy, Georges**
**6 av. Jules Ferry Oiry**
**F-51200 Epernay(FR)**

(74) Mandataire: **Viard, Jean**
**Cabinet VIARD 28 bis, avenue Mozart**
**F-75016 Paris(FR)**

(54) **Dispositif de remuage de bouteilles selon la méthode champenoise.**

(57) Dispositif de remuage pour le traitement du vin selon la méthode champenoise, comprenant un bâti, un berceau monté pivotant sur le bâti et une plateforme tournant autour de l'axe central du berceau.

Selon l'invention, le berceau (10) pivote sous l'action d'une vis verticale (25) et de deux galets (8) disposés à l'extrêmité opposée, portant sur deux rampes (9) du bâti (1).

Applications : Remuage du vin avec le minimum d'énergie par suite de l'équilibrage de l'ensemble.

FIG.1

EP 0 125 969 A1

Croydon Printing Company Ltd.

DISPOSITIF DE REMUAGE DE BOUTEILLES SELON LA METHODE
CHAMPENOISE -

La présente invention a pour objet un dispositif de remuage
destiné au traitement du vin selon la méthode champenoise.
On sait que cette méthode inclût une étape de seconde
fermentation à l'intérieur de la bouteille, étape au cours
de laquelle les levures se développent en donnant avec
l'alcool du sucre et du gaz carbonique. Malheureusement,
au cours de ce processus les levures mortes troublent le
vin alors que celui-ci doit être parfaitement clair lors de
sa consommation.

La méthode champenoise comprend donc une étape dite de
remuage qui consiste, par une agitation contrôlée, à faire
descendre les dépôts à l'intérieur du goulot de la bouteille
d'où ils sont expulsés au cours d'une étape ultérieure dite
de dégorgement.

Pour ce qui est du remuage, la méthode traditionnelle
consiste à poser les bouteilles sur un pupitre et à les
amener progressivement de la position horizontale couchée
à une position verticale dans laquelle le goulot est tourné
vers le sol. Cette opération s'étendant sur plusieurs semaines
est coûteuse. Afin de remédier à cet inconvénient, il a
déjà été proposé, dans le Brevet FR-A-2041582 de remuer
simultanément un ensemble de bouteilles à l'aide d'un
appareil permettant de faire prendre à cet ensemble
les positions nécessaires à l'acheminement du dépôt vers le
goulot. Toutefois, l'appareillage décrit est un appareillage manuel qui ne permet de traiter qu'un nombre limité de
bouteilles.

Afin de remédier à cet inconvénient, on a proposé, dans le
certificat d'utilité FR-A-2473546 un dispositif de
manipulation automatique notamment pour le traitement du
vin selon la méthode champenoise. Dans ce dispositif, les
bouteilles, au nombre de 500 par exemple, sont introduites dans une caisse-palette qui est elle-même introduite dans l'appareillage. Celui-ci comprend un bâti reposant sur le sol. Sur le bâti est monté un chassis ou berceau qui lui-même supporte un cadre support ou plateforme qui reçoit la caisse-palette. Le berceau est monté pivotant autour d'un axe mobile sur le bâti de sorte que, sous l'action de deux bielles disposées sur les côtés, il peut passer de la position horizontale à la position verticale, les bouteilles introduites"sur lattes"étant à la fin du cycle "sur pointes". Simultanément à ce pivotement, le cadre-support peut tourner autour d'un axe disposé au centre du berceau.

Pratiquement, le berceau est entraîné par deux vis disposées horizontalement sur le bâti, les bielles dont les extrêmités sont articulées d'une part sur le bâti et, d'autre part sur le berceau, provoquant le basculement du cadre-support ou plateforme. Les deux vis sont entraînées en rotation par un moteur électrique. Il en va de même pour le cadre-support qui tourne autour de son axe central sous l'action d'un second moteur électrique. L'ensemble des mouvements peut ainsi être programmé de sorte que l'intervention humaine est limitée au minimum.

Bien que d'une cinématique très étudiée, ce dispositif connu présente cependant certains inconvénients. Les efforts qui doivent être appliqués ne sont pas constants ce qui conduit à un certain surdimensionnement des moteurs; l'encombrement est relativement important compte tenu du volume de l'enveloppe de la caisse-palette au cours de son évolution; les vis sont placées au sol et le bris d'une ou plusieurs bouteilles conduit à des blocages de l'appareil; enfin, il n'est pratiquement pas possible de faire tourner le cadre-support en position horizontale. Etant donné la nature de certains vins et de certains adjuvants il est parfois impossible d'obtenir un remuage correct sans procéder à une première rotation dans un plan horizontal alors que les bouteilles sont sur lattes .

La présente invention a pour objet de remédier à ces inconvénients et d'accroître sensiblement la qualité du remuage accompli.

Selon la présente invention, le dispositif de remuage du type comprenant un bâti, reposant sur le sol, un berceau pouvant pivoter d'un angle droit par rapport au bâti, une plateforme montée pivotante autour d'un axe disposé au centre du berceau, le berceau étant monté sur le bâti par l'intermédiaire d'un support mobile sur une vis, est caractérisé en ce que la vis est verticale, l'extrêmité du berceau opposée au support mobile reposant par deux galets sur deux rampes du bâti.

Comme dans la technique antérieure, la caisse palette doit pivoter d'un angle droit autour de son axe. La recherche d'un équilibrage optimum permet l'élimination des points durs au cours du mouvement pivotant désiré . Il en résulte que les efforts à développer sont beaucoup moins importants d'où une réduction de la capacité des organes mécaniques d'entraînement. D'autre part, la position verticale de la ou des vis permet de réduire l'encombrement au sol ce qui est particulièrement appréciable dans le cas de caves dont le volume est limité.

Selon une autre caractéristique de l'invention, une seule vis verticale est utilisée pour déplacer deux plateformes.

Selon encore une autre caractéristique de l'invention, la plateforme est constituée de deux plateaux perpendiculaires, des moyens étant prévus pour verrouiller une caisse-palette contre les deux plateaux.

D'autres caractéristiques et avantages de l'invention apparaîtront au cours de la description qui va suivre de modes de réalisation particuliers, donnés uniquement à titre d'exemples non limitatifs en regard des dessins qui représentent :

4

- La Fig.1, une vue de coté d'un appareil selon l'invention dont la plateforme est constituée par deux plateaux perpendiculaires;
- La Fig.2, une vue de face du même appareil;
- La Fig.3, une vue d'un appareil dans un second mode de réalisation à vis unique;
- La Fig.4, une coupe selon la ligne IV-IV de la Fig.3;
- La Fig.5, une vue de face de l'appareil de la Fig.3;
- La Fig.6, une vue identique à celle de la Fig.3, à la fin du remuage;
- La Fig.7, une vue par-dessus de l'appareil de la Fig.3
- La Fig.8, une vue par-dessus d'un appareil à deux caisse-palettes
- La Fig.9, une vue de coté de l'appareil de la Fig.8
- La Fig.10, une coupe selon la ligne X-X de la Fig.9;
- Les Figs 11 et 12 des vues de face et de coté du même appareil, la Fig. 12 montrant celui-ci à la fin du remuage.
- La Fig.13, une vue en coupe de la colonne de guidage.

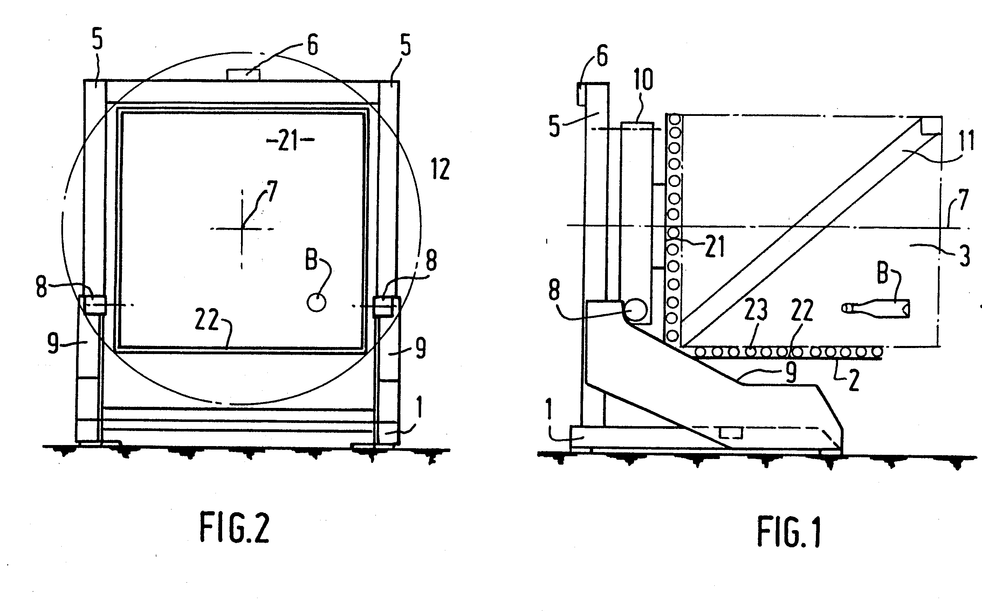

Les Figs. 1 et 2, représentent un premier mode de réalisation de l'invention. L'appareil repose sur le sol par un bâti 1. Ce bâti présente une semelle horizontale à partie de laquelle se dressent deux colonnes verticales 5. Une plateforme 2 constituée de deux plateaux perpendiculaires 21 et 22, reçoit une caisse palette 3 du type décrit dans le Brevet Français N° 79 12443, par exemple. La plateforme 2 est avantageusement munie sur ses faces internes de rouleaux 23 ou autres moyens analogues. Le but de ces rouleaux est de permettre le positionnement et l'extraction de la caisse-palette 3 sur la plateforme. Cette disposition permet notamment l' automatisation du chargement et du déchargement de l'appareil à partir d'un tapis convoyeur (non représenté). Bien entendu, dans le cas représenté où la plateforme est constituée de deux plateaux, il est nécessaire de prévoir des moyens d'arrimage 11 qui maintiennent la caisse 3 appliquée contre la plateforme. Ce mode de réalisation de la plateforme facilite très amplement le chargement de celle-ci puisqu'il n'est pas nécessaire, comme dans le cas d'un cadre-support d'amener le chariot transporteur exactement en face de l'appareil d'où un gain de place appréciable.

Bien entendu, la plateforme 2 peut également, comme cela sera représenté par la suite, être constituée par un châssis support ayant la forme d'un cube dont une des faces est ouverte, la caisse étant glissée par la face ouverte. La plateforme 2 est montée sur un berceau 10 par l'intermédiaire d'une couronne 4 de manière à ce que la plateforme, et par suite la caisse, puisse tourner autour d'un axe 7 qui, sur la fig.1 est en position horizontale. Afin de permettre de suivre l'évolution de la position des bouteilles, on a représenté sur les figures une bouteille B à l'intérieur de la caisse 3. Le berceau 10 est solidaire à sa partie supérieure d'un chariot de guidage qui sera décrit par la suite, chariot de guidage qui se déplace par suite de la rotation des vis contenues dans les colonnes guides 5, les deux vis étant entraînées simultanément par un ou deux moteurs 6.

A la partie inférieure du berceau 10 est monté, de chaque côté, un galet 8, ce galet coopérant avec une rampe 9 formée dans le bâti. Ces différents éléments apparaissent également sur la Fig.2 sur laquelle est représenté en outre un cercle portant la référence 12 délimitant l'encombrement de la caisse 3 au cours de ses déplacements.

Sur les Figs.1 et 2, le dispositif est représenté au moment du chargement. C'est à dire que les bouteilles sont en position horizontale ou sur lattes. Il est à ce moment possible de procéder à un premier remuage en faisant tourner la plateforme 2 par exemple alternativement à gauche et à droite. Puis, sous l'influence de l'organe moteur 6, les vis contenues dans les colonnes 5 tournent, ce qui produit une descente de la partie supérieure du berceau. Sous l'influence de cette descente, les galets 8 se déplacent le long des rampes 9 ce qui produit un changement d'orientation de la caisse, ce mouvement étant combiné avec différentes rotations de la caisse 3 autour de l'axe 7. Afin de communiquer de légères secousses au vin, il est possible de prévoir sur la couronne 4 de petites aspérités. Les moyens mis en oeuvre pour obtenir cette rotation étant

**0125969**

identiques à ceux décrits dans le Certificat d'Utilité. n° 80.00891.

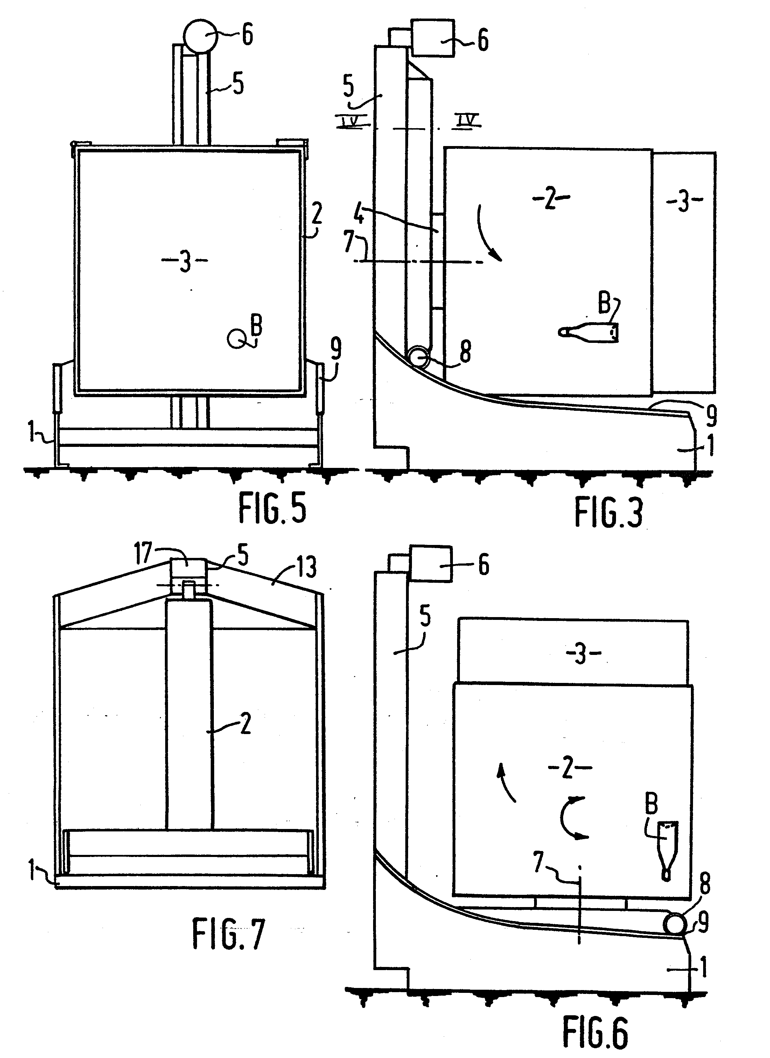

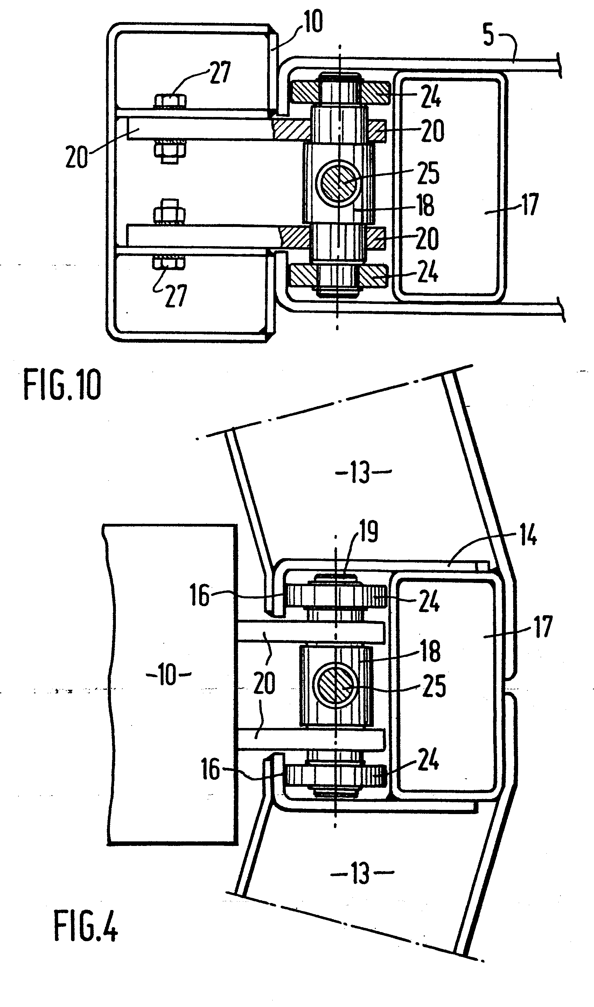

Dans l'exemple qui vient d'être décrit, le berceau se déplace sous l'action de deux vis verticales disposées de part et d'autre du bâti. Pratiquement, et compte tenu de la cinématique du dispositif, il est possible de n'utiliser qu'une seule vis verticale qui, dans ce cas, est disposée au centre de l'appareil et sur la partie arrière de celui-ci. Ce mode de réalisation fait l'objet des Figs. 3 à 7. On retrouve sur ces figures des éléments précédemment mentionnés et notamment le bâti 1, la plateforme 2, la caisse palette 3, la couronne 4 et le berceau 10 portant à sa partie inférieure sur le bâti au moyen de galets 8 se déplaçant le long d'une rampe 9.

La Fig.4 est une coupe selon la ligne IV-IV de la Fig.3. Dans ce mode de réalisation, le bâti 1 comprend deux bras 13 réunis dans la partie centrale pour former une colonne de guidage 14. Cette colonne de guidage forme une cage rectangulaire à l'intérieur de laquelle se déplace un chariot d'entrainement 15 entre des chemins de roulement 16 et un profilé à section rectangulaire 17. Le chariot de guidage 15 comprend d'une part un écrou 18 à partir duquel s'étendent de part et d'autre deux manetons 19. Les manetons portent d'une part un attelage 20 monté pivotant et un galet 24 qui roule sur le chemin de guidage 16 Lorsque la vis centrale 25 est entrainée en rotation dans un sens ou dans un autre, il se produit un déplacement vertical dépendant du sens de rotation de la vis, qui se traduit par un déplacement vertical de l'extrémité supérieure du berceau 10 et par suite par un changement d'inclinaison de la plateforme 2.

La Fig.6 représente l'appareil de la Fig.3 après exécution complète du cycle de remuage. L'appareil peut être déchargé, les bouteilles étant alors sur pointes. Comme cela apparait sur les Figs.4 et 7, la colonne de guidage est munie d'un profilé 17 creux qui sert de chemin de roulement aux galets 24. Ce profilé 17 peut avantageusement être utilisé pour assembler plusieurs appareils destinés à fonctionner en batterie puisqu'il suffit d'introduire à l'intérieur du profilé creux des éléments de liaison pour obtenir des assemblages horizontaux et/ou verticaux.

Comme cela apparait sur les Figs.3, 6 et 7, pour des raisons d'encombrement, la colonne 5 doit être rejetée vers l'arrière pour permettre la rotation de la caisse palette autour de son axe 7 sous les différentes inclinaisons provenant du déplacement des galets 8 sur la rampe 9.

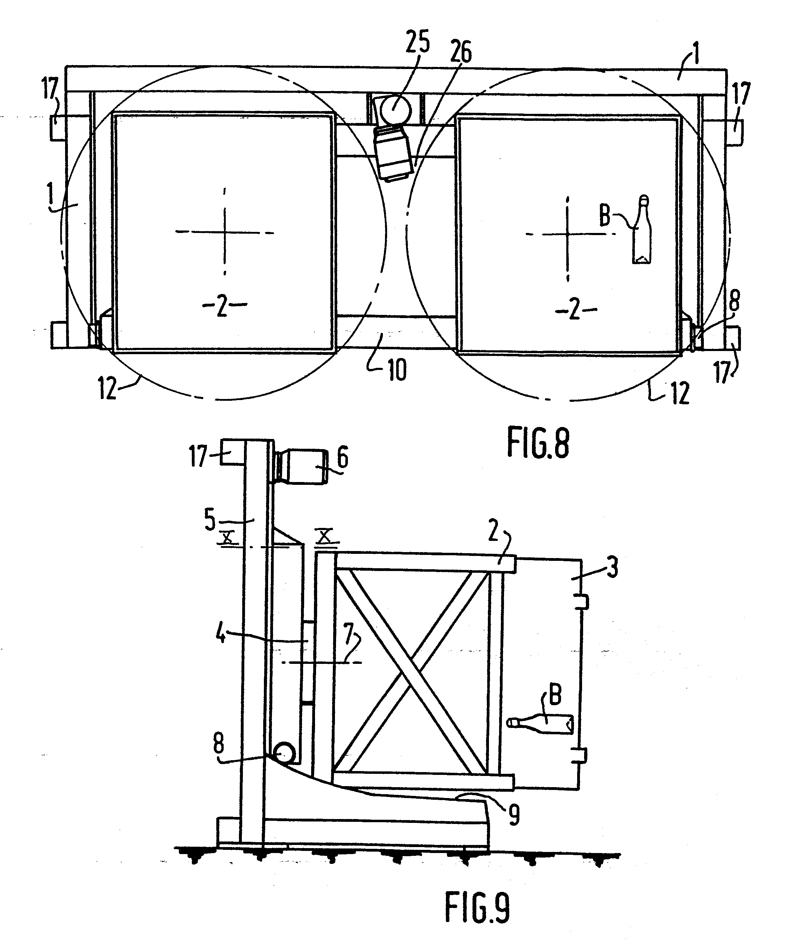

Un autre mode de réalisation est représenté sur les Figs. 8 à 12 dans lequel l'encombrement en profondeur est réduit, c'est à dire dans lequel il n'y a plus besoin de procéder à un déport de la colonne 5 supportant le chariot guide. Sur ces figures, les mêmes références désignent les mêmes constituants que précédemment. Dans ce mode de réalisation, deux plateformes 2 sont réunies sur un même bâti 1, sur un même berceau 10 et entraînées par un seul moteur 6 qui comme précédemment agit sur une vis verticale 25, la rotation de cette vis provoquant le basculement des caisses portées par les plateformes par portée des galets 8 sur des rampes latérales 9.

On a représenté sur la Fig.8 une vue par dessus de ce dispositif et on a schématisé en traits interrompus les cercles 12 formant enveloppe du débattement des caisses palettes. Comme cela apparait clairement sur la Fig.8, il existe entre les deux développés 12 un espace 26 dans lequel peut être disposé le groupe moto-réducteur 6 de sorte qu'il est possible d'intégrer parfaitement celui-ci dans un châssis dont la profondeur est égale à la profondeur du premier mode de réalisation. C'est à dire que par rapport aux appareils actuellement sur le marché, on gagne environ 30 cms.

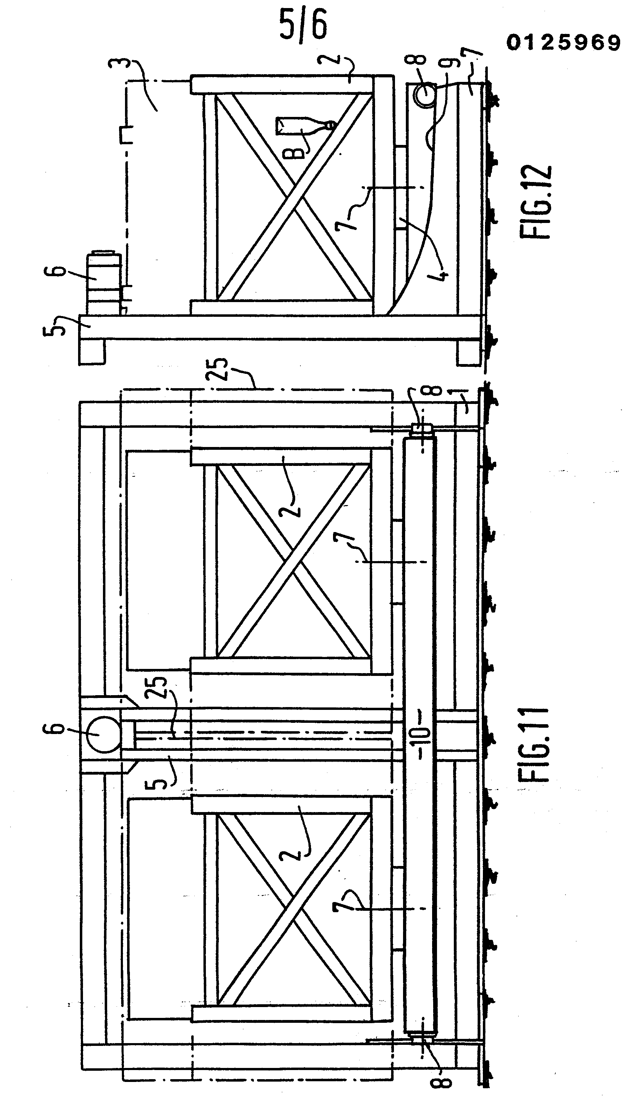

La Fig.9 représente en vue de côté un dispositif à double plateforme au début du remuage alors que la Fig.12 est la

8                              0125969

même vue en fin du remuage.

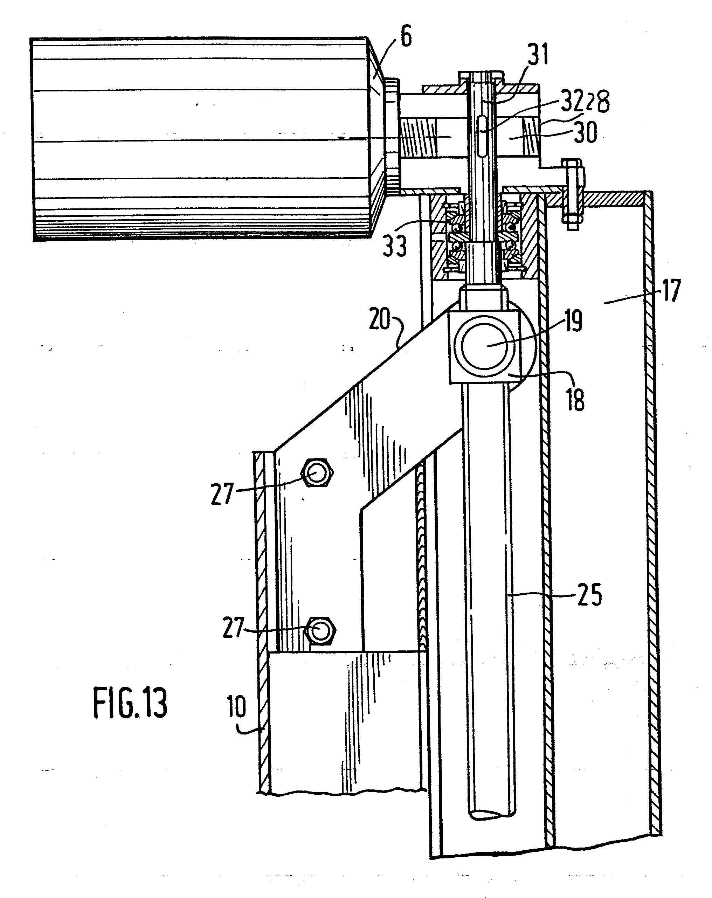

La Fig.10 est une coupe horizontale selon la ligne X-X de la Fig.9. On y retrouve les éléments mentionnés en regard de la Fig.4 et notamment la vis centrale verticale , le profilé 17, la noix ou écrou 18 ainsi que l'attelage 20. Dans ce mode de réalisation, l'attelage 20 est boulonné par des boulons 27 sur le berceau 10 qui se déplace le long de la colonne guide 5 de sorte que le porte à faux est ainsi réduit. Ce montage apparait également sur la Fig.13 qui est une coupe verticale de la colonne de guidage.

La Fig.11 est une vue de face d'un dispositif à deux plateformes 2, celles-ci étant constituées par des châssis supports de type connu, c'est à dire constitués par un parallépipède à faces croisillonnées dont l'une des faces est ouverte. Bien entendu, les deux plateformes qui sont réunies à leurs extrémités inférieures par une entretoise commune terminée par des galets 8, ont à tout moment la même inclinaison par rapport à l'horizontale.Toutefois, afin d'améliorer la qualité du remuage, il est possible de désynchroniser leurs mouvements de rotation autour des axes 7 de sorte que la rotation d'une plateforme produit une légère secousse sur la plateforme associée.

La Fig.13, montre le haut d'une colonne de guidage, en coupe partielle. Le motoréducteur 6 entraîne la vis 25 par un ensemble roue dentée 30- vis sans fin 28. La roue 30 est solidarisée de l'arbre 31 d'extrêmité de la vis 25 au moyen d'une clavette 32. La vis 25 est maintenue à l'encontre des efforts de déplacement verticaux par une butée à billes 33. Tout autre système d'entraînement, tel qu'un engrenage à renvoi d'angle,peut être utilisé.

Bien que la description qui précède ne mentionne qu'un entraînement par vis, qui est bien adapté au basculement lent que l'on désire obtenir, le déplacement en translation verticale de l'une des extrémités du berceau peut dépendre de l'action d'un vérin pneumatique ou hydraulique.

Dans la description qui vient d'être faite, l'extrêmité du berceau 10 opposée à la colonne 5 repose sur des rampes 9 du bâti par des galets 8. Afin d'améliorer le remuage, il est possible de monter les galets 8 sur le berceau 10 au moyen d'un montage à excentrique ce qui provoque de légères secousses. Une autre alternative consiste à prévoir des reliefs sur les rampes 9.

Il va de soi que de nombreuses variantes peuvent être apportées, notamment par substitution de moyens techniquement équivalents, sans sortir pour celà du cadre de la présente invention.

0125969

REVENDICATIONS

1° Dispositif de remuage pour le traitement du vin selon la méthode champenoise comprenant un bâti reposant sur le sol, un berceau pouvant pivoter d'un angle droit par rapport au bâti et une plateforme pouvant tourner autour d'un axe disposé au centre du berceau, la plateforme pouvant recevoir une caisse-palette contenant des bouteilles, caractérisé en ce que l'une des extrêmités du berceau est solidaire d'un support (18) mobile en translation verticale et articulé sur ledit support (18), les extrêmités du berceau opposées au support (18) reposant par l'intermédiaire de deux galets (8) sur des rampes (9) du bâti (1).

2° Dispositif de remuage selon la revendication 1, caractérisé en ce que le support mobile (18) se déplace par rotation d'une vis (25) entraînée par un motoréducteur (6), à l'intérieur d'une colonne de guidage verticale (5) solidaire du bâti (1).

3° Dispositif de remuage selon la revendication 2, caractérisé en ce que le berceau (10) prend appui d'une part sur les rampes (9) et, d'autre part sur deux écrous (18) se déplaçant à l'intérieur de deux colonnes verticales (5) disposées de part et d'autre du bâti (1).

4° Dispositif de remuage selon la revendication 2, caractérisé en ce que la colonne de guidage (5) est disposée à l'arrière du bâti (1) et au centre de celui-ci, la colonne (5) étant maintenue par des bras (13).

5° Dispositif de remuage selon la revendication 2, caractérisé en ce que le bâti (1) supporte un berceau (10) recevant deux plateformes (2) pivotant simultanément mais pouvant tourner indépendamment autour d'axes (7), la colonne de guidage (5) étant inscrite entre les enveloppes (12) des caisse-palettes (3).

6° Dispositif de remuage selon l'une quelconque des revendications précédentes, caractérisé en ce que la plateforme (2) est constituée par deux plateaux perpendiculaires l'un à l'autre (21,22).

7° Dispositif de remuage selon la revendication 6, caractérisé en ce que les plateaux (21,22) sont munis de rouleaux (23).

8° Dispositif selon l'une quelconque des revendications précédentes, caractérisé en ce que le berceau (10) est monté coulissant sur la vis (25) par l'intermédiaire d'une noix (18) solidaire de deux manetons (19) portant par l'intermédiaire de galets (24) sur un chemin de roulement (16) formée par la colonne de guidage (5), un profilé creux (17) étant monté à l'intérieur de la colonne (5).

9° Dispositif de remuage selon l'une quelconque des revendications précédentes, caractérisé en ce qu'un groupe motoréducteur (6) d'entraînement de la vis (25) est monté sur le bâti (1) au-dessus de la vis (25).

10° Dispositif de remuage selon l'une quelconque des revendications précédentes, caractérisé en ce que la colonne de guidage (5) comporte un profilé creux (17) d'assemblage horizontal et/ou vertical d'un ensemble de dispositifs.

0125969

FIG.1

FIG.2

FIG.5

FIG.3

FIG.7

FIG.6

FIG.10

FIG.4

FIG.8

FIG.9

FIG.11

FIG.12

FIG.13

**0125969**

# RAPPORT DE RECHERCHE EUROPEENNE

Office européen
des brevets

EP 84 40 0877

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | FR-A-2 473 546 (GIE MCA GYROPALETTE) <br><br> ----- | | C 12 G  1/06 |

**DOMAINES TECHNIQUES RECHERCHES (Int. Cl. ³)**

C 12 G

Le présent rapport de recherche a été établi pour toutes les revendications

| Lieu de la recherche <br> LA HAYE | Date d'achèvement de la recherche <br> 12-06-1984 | Examinateur <br> COUCKE A.O.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82